# EUROPÄISCHE PATENTSCHRIFT

(11) **EP 1 029 175 B1**
(45) Veröffentlichungstag und Bekanntmachung des Hinweises auf die Patenterteilung: **26.03.2003**
(21) Anmeldenummer: 98963315.1
(22) Anmeldetag: 02.11.1998
(51) Int. Cl.: F02M 61/16

(54) **VERFAHREN UND EINSPRITZDÜSE ZUM EINSPRITZEN VON KRAFTSTOFF IN DEN BRENNRAUM EINER BRENNKRAFTMASCHINE**
METHOD AND INJECTION NOZZLE FOR INJECTING FUEL INTO THE COMBUSTION CHAMBER OF AN INTERNAL COMBUSTION ENGINE
PROCEDE ET GICLEUR POUR L'INJECTION DE CARBURANT DANS LA CHAMBRE D'EXPLOSION D'UN MOTEUR A COMBUSTION INTERNE

(30) Priorität: 03.11.1997 DE 19748384; 05.08.1998 DE 19835340
(43) Veröffentlichungstag der Anmeldung: 23.08.2000
(73) Patentinhaber: Slowik, Günter, 06217 Merseburg (DE); Kohlmann, Jürgen, 06217 Geusa (DE)
(72) Erfinder: Slowik, Günter, 06217 Merseburg (DE); Kohlmann, Jürgen, 06217 Geusa (DE)
(74) Vertreter: Tragsdorf, Bodo, Dipl.-Ing.
(86) Internationale Anmeldenummer: DE9803198
(87) Internationale Veröffentlichungsnummer: WO99023383

(56) Entgegenhaltungen:
- EP-A- 0 200 865
- DE-A- 2 460 111
- US-A- 4 179 069
- US-A- 4 805 837

## Beschreibung

Die Erfindung betrifft ein Verfahren zum Einspritzen von Kraftstoff, insbesondere in den Brennraum, von Brennkraftmaschinen, über eine Dralleinspritzdüse mit axialbeweglicher Ventilnadel, wobei der unter Druck stehende zugeführte Kraftstoff in einer unmittelbar vor der Austrittsdüse angeordneten ringförmigen Drallkammer in Rotation um die Ventilnadel versetzt wird. Die Erfindung bezieht sich ferner auf eine zur Durchführung des Verfahrens geeignete Einspritzdüse.

Sowohl für Diesel- als auch für Ottomotoren sind bereits eine Vielzahl an Verfahren und Vorrichtungen für die direkte Einspritzung von Kraftstoff in den Brennraum bekannt. Der Kraftstoff wird über ein Pumpe-Düse-System oder über ein Pumpe-Leitung-Düse-System (Common-Rail-System) während des Verdichtungsvorganges in den Brennraum des Motors eingedüst und dabei zerstäubt. Der Einspritzvorgang kann auch in mehreren Phasen stattfinden, sogenannte Vor- und Haupteinspritzung.
Eine wesentliche Gemeinsamkeit dieser Einspritzsysteme ist eine Zerstäubung aus der Ruhephase der Flüssigkeit. In einem Zeitraum, der im Bereich von Millisekunden liegt, wird aus der potentiellen Energie eine Umwandlung in kinetische Energie (Geschwindigkeit des Kraftstoffs) vollzogen und die geringe Kraftstoffmenge an der Düsenaustrittsöffnung zerstäubt.
Aus der DE-OS 24 60 111 ist bereits eine gattungsgemäße Einspritzdüse zum Einspritzen einer Flüssigkeit in einem Druckschwankungen unterworfenen Raum während einer Niederdruckphase bekannt.
Der zugeführte Kraftstoff gelangt in einen um die Düsennadelführung angeordneten Ringraum und von diesem über tangentiale Zuströmöffnungen am Ende der Düsennadelführung in eine ringförmige Drallkammer, die um die Düsennadel angeordnet ist. Innerhalb der Drallkammer wird eine Ringströmung aufgebaut und in dieser gespeichert. Bei einem größeren Volumen der Drallkammer kann der Rotationseffekt noch dadurch verstärkt werden, indem in der Drallkammer wenigstens eine Rückflußöffnung angeordnet wird, die bevorzugt etwa tangential an die Drallkammer anschließt und sich am oberen Ende des Ringraumes in der Düsennadelführung befindet. Die tangentiale Zuströmöffnung und die tangentiale Rückflußöffnung sind in bezug auf die Strömungsrichtung entgegengesetzt gerichtet angeordnet. Wie in dieser Druckschrift angegeben, soll der Kraftstoff in der Drallkammer rotierend zwischengespeichert werden. Eine Zwischenspeicherung liegt nur dann vor, wenn zumindest bei geschlossener Düsenaustrittsöffnung auch die Rückflußöffnung geschlossen ist. Zwangsläufig verringert sich die Rotationsgeschwindigkeit während derZwischenspeicherung. Während der Abspritzphase teilt sich dann der Kraftstofffluß bei geöffneter Rückflußöffnung in zwei Teilströme, wobei durch den nach oben gerichteten Teilstrom in Richtung Rückflußöffnung Verwirbelungen auftreten, die sich nachteilig auf die Zerstäubungsqualität auswirken.
Bekannt ist auch ein elektromagnetisches Kraftstoff-Einspritzventil für Brennkraftmaschinen (US-A-4,179,069), das insbesondere zur Einspritzung von Kraftstoff in das Saugrohr eines Fahrzeugmotors bestimmt ist. Der Kraftstoff wird über eine Dralleinspritzdüse mit axialbeweglicher Ventilnadel eingespritzt, wobei der unter Druck stehende zugeführte Kraftstoff in einer unmittelbar vor der Austrittsdüse angeordneten ringförmigen Drallkammer in Rotation um die Ventilnadel versetzt wird und der Kraftstoff an der Stelle des größten Radius der Drallkammer in diese durch eine die Umfangsgeschwindig-keitskomponente erzeugende Kraftstoffeinleitung eingeleitet wird. Die Abführung des Kraftstoffstromes erfolgt an der Stelle des kleinsten Radius der Drallkammer aus dieser konzentrisch zur Ventilnadel. Während der Einspritzphase wird die Abführung des Kraftstoffes aus der Drallkammer unterbrochen.
Ein Verfahren zum Einspritzen von Kraftstoff über eine Dralleinspritzdüse mit axialbeweglicher Ventiinadel ist auch aus der US-A-4,805,837 bekannt. Unmittelbar vor der Austrittsöffnung der Düse ist eine ringförmige Drallkammer angeordnet. Der Kraftstoff wird an der Stelle des größten Radius in die Drallkammer eingeleitet und bei geschlossener Austrittsöffnung an der Stelle des kleinsten Radius der Drallkammer konzentrisch zur Ventilnadel abgeführt. Während der Einspritzphase wird die Abführung des Kraftstoffes unterbrochen.
Die bekannten vorgenannten Einspritzverfahren haben generell den Nachteil, daß die Einspritzmenge zur Erreichung eines optimalen Einspritzverlaufes nicht in ausreichendem Maße variiert werden kann und die erzielbare Zerstäubungsqualität nicht den gestellten hohen Anforderungen entspricht.

Der Erfindung lag die Aufgabe zugrunde, ein Verfahren zum Einspritzen von Kraftstoff, insbesondere in den Brennraum, von Brennkraftmaschinen, zu schaffen, mit dem es möglich ist, eine rotationssymmetrische Verteilung des Kraftstoffes beim Eintritt in den Brennraum zu erzielen, das eine hohe Zerstäubungsqualität, insbesondere bereits während des Beginns des Einspritzvorganges, und einen optimalen Einspritzverlauf während der Öffnungszeit der Düsenaustrittsöffnung gewährleistet und bei dem die Einspritzmenge bei gleichem Vordruck und konstanter Öffnungszeit der Ventilnadel variiert werden kann.
Ferner soll eine zur Durchführung des Verfahrens geeignete Einspritzdüse geschaffen werden, die kostengünstig herstellbar ist.

Erfindungsgemäß wird die Aufgabe durch die im Anspruch 1 angegebenen Merkmale gelöst. Geeignete Ausgestaltungsvarianten des Verfahrens sind in den Ansprüchen 2 bis 10 angegeben. Eine Einspritzdüse zur Durchführung des Verfahrens ist erfindungsgemäß durch die im Anspruch 11 angegebenen Merkmale charakterisiert. Geeignete Ausgestaltungsvarianten der Einspritzdüse sind in den Ansprüchen 12 bis 23 angegeben.

Der Kraftstoff wird an der Stelle des größten Radius der Drallkammer in diese eingeleitet, vorzugsweise über tangential oder schräg von oben nach unten verlaufende Kanäle, und an der Stelle des kleinsten Radius der Drall kammer aus dieser konzentrisch zur Ventilnadel abgeführt, bei geschlossener Düsenaustrittsöffnung. Der in die Drallkammer eingeleitete Kraftstoff wird in dieser einem nahezu ebenen rotationssymmetrischen Strömungsverlauf unterworfen. Diese Strömung weist außer der Umfangsgeschwindigkeitskomponente noch eine radiale Komponente auf, die zur vertikalen Achse der Drallkammer und damit zur Ventilnadel gerichtet ist, wobei die axiale Geschwindigkeitskomponente vemachlässigbar klein ist.
Zum Einspritzen des Kraftstoffes in den Brennraum wird die Ventilnadel geöffnet und dabei gleichzeitig die Rückströmmenge des Kraftstoffes aus der Drallkammer teilweise oder vollständig gedrosselt. Der Kraftstoff wird nicht aus der Ruhelage, sondern im Zustand einer bereits vorhandenen kinetischen Energie infolge der anliegenden Rotationsgeschwindigkeit durch den zum Einspritzzeitpunkt gebildeten Förderdruck der Pumpe in den Brennraum eingespritzt. Da der Strömungsverlauf des rotierenden Kraftstoffes unmittelbar zum Zeitpunkt des Einspritzens in den Brennraum bereits zur Düsennadel gerichtet ist, und durch die Öffnung der Düsennadel keiner weiteren Richtungsänderung in der Drallkammer unterliegt, wird eine verbesserte Zerstäubungsqualität erreicht. Außerdem besitzt die Kraftstoffströmung zu diesem Zeitpunkt bereits eine hohe kinetische Energie. Das vorgeschlagene Verfahren ist für Einspritzsysteme mit kontinuierlich oder diskontinuierlich arbeitender Einspritzpumpe geeignet und für sogenannte Common-Rail-Systeme. Vorzugsweise sollte der in der Drallkammer rotierende Kraftstoff mindestens eine vollständige Drehbewegung um die Ventilnadel ausführen, bevor der Einspritzvorgang ausgelöst wird. Dadurch wird eine besonders hohe Zerstäubungsqualität erreicht.
Verfahrensgemäß kann der Einspritzvorgang durch Variationen sowohl der Kraftstoffzuführung in die Drallkammer als auch der Kraftstoffabführung aus der Drallkammer gesteuert werden.
Der Kraftstoff kann durch mehrere Eintrittsöffnungen bzw. Kanäle mit identischer oder unterschiedlicher Querschnittsfläche in die Drallkammer eingeleitet werden, wobei auch die jeweiligen Kraftstoffteilmengen unterschiedlich sein können. Eine zusätzliche unterschiedliche zeitliche Steuerung kann für eine sogenannte Vor- und Haupteinspritzung genutzt werden. Um die gewünschte Rotation des Kraftstoffes in der Drallkammer zu erzielen, ist entweder eine tangentiale oder eine schräg von oben nach unten verlaufende Einleitung des Kraftstoffes in die Drallkammer erforderlich.
Das Rück- bzw. Abströmen des Kraftstoffes aus der Drallkammer kann in mehreren Phasen erfolgen, deren zeitliche Folge unterschiedlich geregelt sein kann, so daß zu definierten Zeitpunkten unterschiedliche Teilmengen abströmen. Zweckmäßig ist es, beim Pumpe-Düse-System die Veränderung des Querschnittes der Ausströmöffnung innerhalb der Einspritzdüse durch den Bewegungsablauf der Ventilnadel zu steuern. Unterschiedliche Einspritzmengen lassen sich verfahrensgemäß z.B. wie folgt realisieren, wobei der Vordruck konstant bleibt und die Ventilnadel jeweils zum gleichen Zeitpunkt die Düsenaustrittsöffnung freigibt. Durch die Einstellung der Rückströmmenge aus der Drallkammer kann gleichzeitig die tatsächlich einzuspritzende Menge eingestellt werden, bei gleicher Kraftstoffmenge, die in die Drallkammer gefördert wird. Eine andere bevorzugte Möglichkeit besteht darin, daß der der Drallkammer zugeführte Kraftstoff vor der Drallkammer in zwei Teilströme aufgeteilt wird, die unabhängig voneinander einstellbar sind. Ohne Veränderung der Rückströmmenge können somit unterschiedliche Einspritzmengen realisiert werden.

Bei einer Zuführung des Kraftstoffes als zwei identische Teilströme kann bei Absperrung eines Teilstromes bei gleichem Vordruck nur noch die Hälfte der Kraftstoffmenge in die Drallkammer gelangen und in den Brennraum eingespritzt werden. Wie diese Ausführungen zeigen, sind mit der erfindungsgemäßen Verfahrensweise eine Vielzahl an Varianten zur Beeinflussung der eingespritzten Kraftstoffmenge möglich.
Als eine weitere Maßnahme, insbesondere zur Verbesserung der Zerstäubungsqualität während des Beginns des Einspritzvorganges wird vorgeschlagen, den bei geschlossener Düsenaustrittsöffnung aus der Drallkammer abzuführenden Kraftstoff konzentrisch unmittelbar um die Ventilnadel in Einspritzrichtung abzuführen. Dadurch wird erreicht, daß beim Öffnen der Ventilnadel der Kraftstoff eine Rotationsbewegung mit einer sehr hohen Geschwindigkeit ausführt und in seiner Strömungsrichtung bereits in Richtung der Düsenaustrittsöffnung ausgerichtet ist. In dem in Einspritzrichtung konzentrisch um die Ventilnadel verlaufenden Ringkanal liegt somit ständig, unabhängig vom Öffnungs- und Schließvorgang der Ventilnadel, ein Kraftstoffstrom mit einer sehr hohen Rotationsgeschwindigkeit an. Der überschüssige Kraftstoff wird radial abgeführt und gelangt dann über in entgegengesetzter Richtung zur Einspritzrichtung verlaufende Kanäle in das an sich übliche Abführungssystem innerhalb der Einspritzdüse.
Bei der Realisierung des Verfahrens innerhalb eines Common-Rail-Systems ist in der zum Kraftstoff führenden Rücklaufleitung ein Ventil eingebaut, dessen Steuerung die Abführung unterschiedlicher Kraftstoffmengen ermöglicht. Die Kraftstoffzuführung erfolgt über zwei getrennte Leitungen mit steuerbaren Ventilen. Der Vorteil der erfindungsgemäßen Verfahrensweise innerhalb eines Common-Rail-Systems besteht vor allem darin, daß der in diesem System wirkende Druckstoß abgebaut wird, da ständig ein Ventil geöffnet ist, entweder die Ventilnadel beim Einspritzen des Kraftstoffes in den Brennraum oder das Ventil in der Rückströmleitung bei geschlossener Düsenaustrittsöffnung.
Eine vorteilhafte weitere Ausgestaltung des Verfahrens besteht darin, daß die jeweiligen Teilstrommengen des eingespritzten Kraftstoffes und/oder des aus der Drallkammer abgeführten Kraftstoffes auch als Stellgröße zur Steuerung verschiedener Zielgrößen, wie z.B. der Abgasqualität, genutzt werden können.
Die zur Durchführung des Verfahrens vorgeschlagene Einspritzdüse weist eine Drallkammer auf, deren Außendurchmesser größer ist als die Höhe der Drallkammer, wobei das Verhältnis von Außendurchmesser zu Höhe vorzugsweise größer als 2 : 1 sein sollte. Ein vorteilhafter Strömungsverlauf in der Drallkammer wird z.B. gewährleistet, wenn die Höhe der Drallkammer nicht mehr als 10 % größer ist als der größte Durchmesser der in der Hülse eingearbeiteten Zuführungskanäle. Wesentlich ist auch, daß die Abführung des Kraftstoffes aus der Drallkammer konzentrisch um die Ventilnadel angeordnet ist. Der Verlauf der Kanäle für die Zuführung des Kraftstoffes in die Drallkammer und die Abführung aus der Drallkammer kann auf verschiedene Art und Weise gelöst werden. Bei einer besonderes geeigneten Ausführung ist die Ventilnadelführung als Hülse ausgebildet und die Drallkammer ist am auslaßseitigen Ende der Hülse eingearbeitet. Die Zuführung des Kraftstoffes erfolgt über axiale Kanäle zwischen der Hülse und dem Düsenkörper sowie über in die Hülse eingearbeitete tangentiale oder schräg von oben nach unten verlaufende Kanäle, die in die Drallkammer münden. Im oberen Teil der Drallkammer ist um den Zapfen der Ventilnadel ein Ringspalt angeordnet, durch den der Kraftstoff aus der Drallkammer abströmen kann.
Eine Verbesserung der Zerstäubungsqualität zu Beginn des Einspritzvorganges wird dadurch erreicht, wenn zur radialen Abführung aus baulichen Gründen eine Ringkammer vorgesehen ist. Diese kann sowohl in der Hülse als auch im auslaßseitigen Bereich des Düsenkörpers oder in beiden Bauteilen eingearbeitet sein. Wesentlich ist, daß die Ringkammer nur eine geringe Höhe aufweist und nicht höher sein sollte, als die Drallkammer und nur in einem geringen axialen Abstand zur Drallkammer angeordnet ist, da durch die zusätzliche Anordnung der Ringkammer der Strömungsweg von der Drallkammer zur Düsenaustrittsöffnung nur in begrenztem Maß verlängert werden kann. Innerhalb der Ringkammer kann der Kraftstoff seine Rotationsgeschwindigkeit abbauen und dann über die entsprechenden Kanäle in den Vorratsbehälter zurückgeführt werden.
Zum Öffnen und Verschließen der Abströmleitung beim Pumpe-Düse-System ist im oberen Teil der Hülse eine radiale Bohrung vorgesehen, deren Öffnung durch den Bewegungsablauf der Ventilnadel freigegeben oder verschlossen wird. Die vorgeschlagene Einspritzdüse zeichnet sich durch einen einfachen konstruktiven Aufbau aus und ist kostengünstig herstellbar.

Die Erfindung soll nachstehend an mehreren Ausführungsbeispielen näher erläutert werden. In der zugehörigen Zeichnung zeigen
- Fig. 1: eine erfindungsgemäße Einspritzdüse eines Pumpe-Düse-System als Längsschnitt,
- Fig. 2: einen um 90° um die Längsachse gedrehten Schnitt der Einspritzdüse gemäß Fig. 1,
- Fig. 3: einen Schnitt gemäß der Linie B - B in Fig. 2,
- Fig. 4: eine vergrößerte Darstellung der Einzelheit X in Fig. 1,
- Fig. 5: einen Schnitt gemäß der Linie C - C in Fig. 4,
- Fig. 6: eine weitere Ausführungsvariante der erfindungsgemäßen Einspritzdüse eines Pumpe-Düse-Systems als Längsschnitt,
- Fig. 7: einen Schnitt gemäß der Linie D - D in Figur 6,
- Fig. 8: den Kurvenverlauf der örtlichen Umfangsgeschwindigkeit in der Drallkammer in Abhängigkeit von der Zeit zwischen den Phasen Förderbeginn und Förderende der Einspritzdüse eines Pumpe-Düse-Systems,
- Fig. 9: eine weitere Ausführungsvariante der erfindungsgemäßen Einspritzdüse eines Pumpe-Düse-Systems mit einem schräg verlaufenden Zuführungskanal, als Längsschnitt,
- Fig. 10: einen um 90° um die Längsachse gedrehten Schnitt der Einspritzdüse gemäß Fig. 9,
- Fig. 11: einen Schnitt gemäß der Linie F - F in Figur 9,
- Fig. 12: eine erfindungsgemäße Einspritzdüse für ein Common-Rail-System als Längsschnitt,
- Fig. 13: einen Schnitt gemäß der Linie E - E in Fig. 12,
- Fig. 14: ein Funktionsschaltbild für den Steuerungsablauf einer Einspritzdüse gemäß Fig. 12 und Fig. 15,
- Fig. 15: eine weitere Ausführungsvariante einer Einspritzdüse für ein Common-Rail-System als Längsschnitt,
- Fig. 16: einen Schnitt gemäß der Linie G - G in Fig. 14,
- Fig. 17: einen Teilbereich einer Einspritzdüse eines Pumpe-Düse-Systems für eine weitere Ausführungsvariante zur Abführung des Kraftstoffes aus der Drallkammer als Längsschnitt und
- Fig. 18: einen Schnitt gemäß der Linie A - A in Fig. 17.

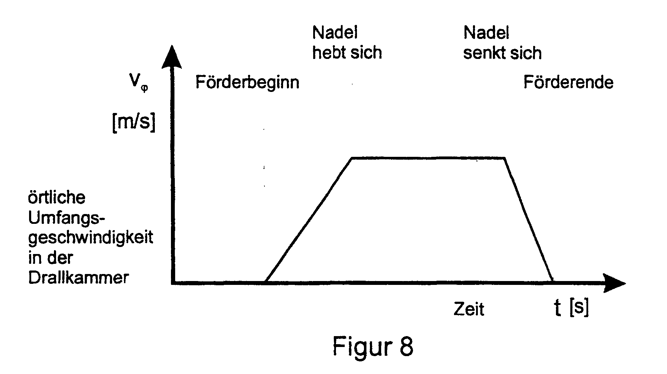

Die in der Zeichnung gezeigten Einspritzdüsen sind nur vereinfacht dargestellt. Alle weiteren nicht dargestellten Bauteile der Einspritzdüsen sind bekannter Stand der Technik.

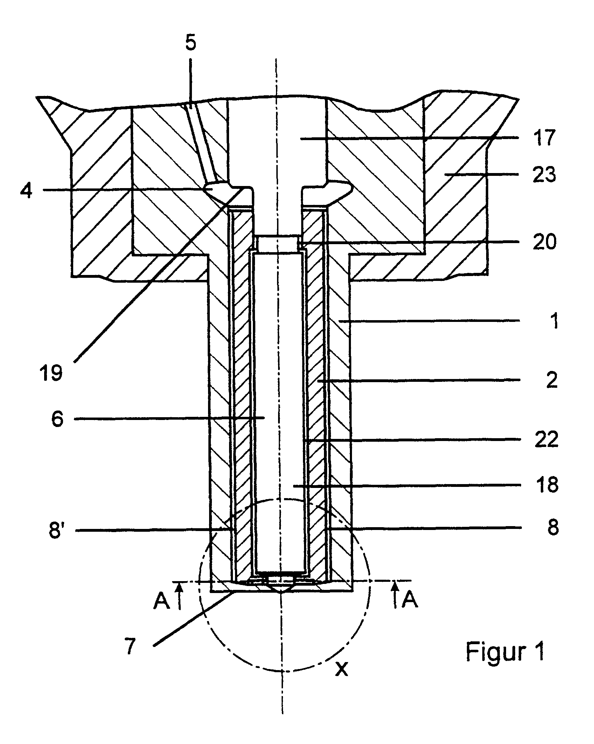

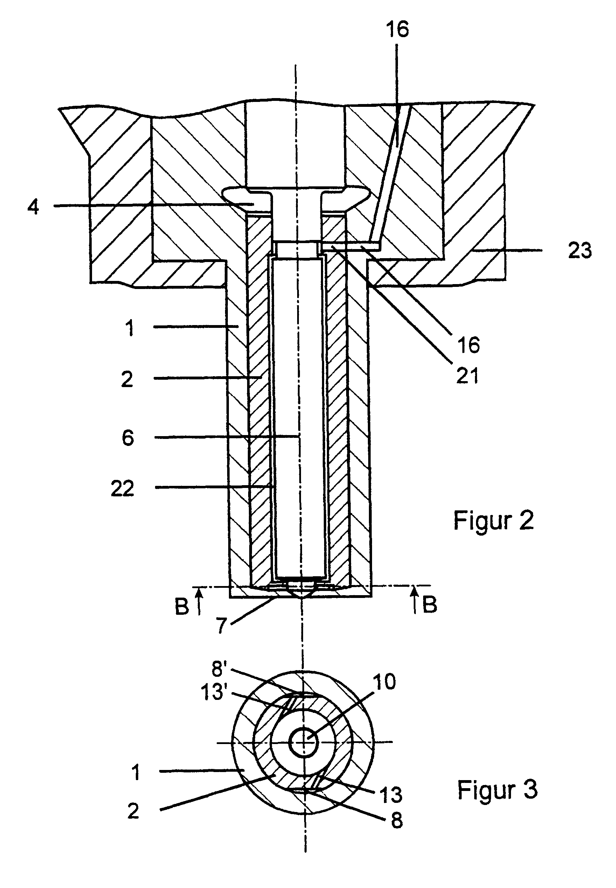

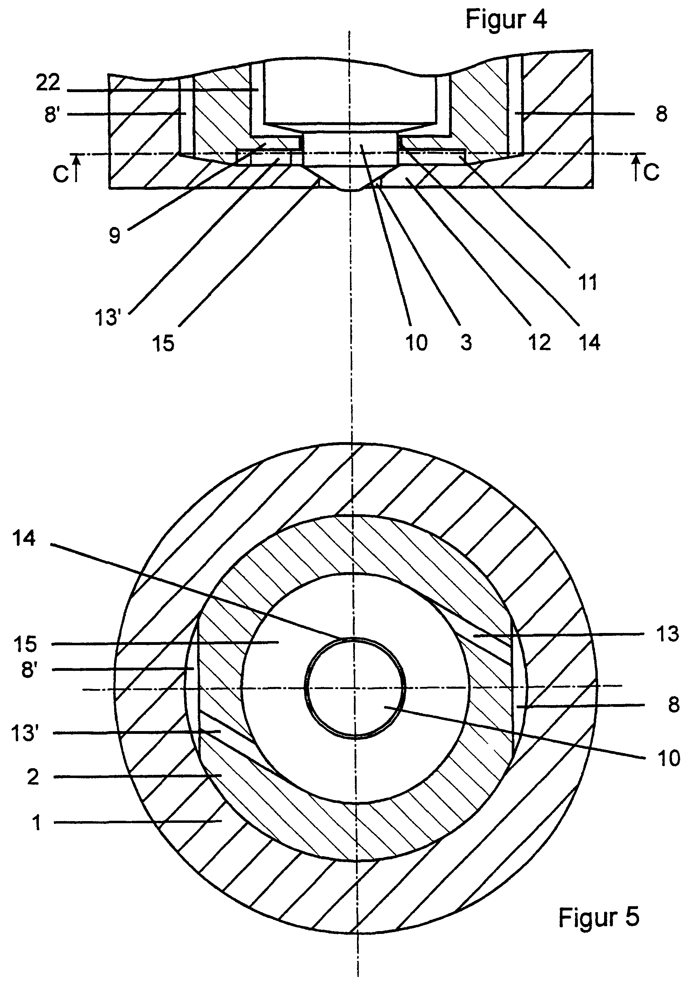

In der Fig. 1 ist eine Einspritzdüse für ein Pumpe-Düse-System einer Kraftstoffeinspritzvorrichtung für einen Verbrennungsmotor gezeigt. Die Einspritzdüse besteht aus einem Düsenkörper 1, der eine durchgehende axiale Bohrung aufweist, in der eine Hülse 2 fest eingesetzt ist. An der auslaßseitigen Stimfläche 7 des Düsenkörpers 1 befindet sich die kegelförmige Düsenaustrittsöffnung 3, die mittels der in der Hülse 2 und dem Düsenkörper 1 angeordneten axial beweglichen Ventilnadel 6 verschließbar ist und in dem Ringbund 12 des Düsenkörpers 1 eingearbeitet ist (Fig. 4). Die Hülse 2 erstreckt sich von dem auslaßseitigen Ende des Düsenkörpers 1 bis zu dem im Düsenkörper 1 eingearbeiteten rotationssymmetrischen Druckraum 4. Dieser ist über einen Kanal 5 mit der Kraftstoffzuführung verbunden. In der im Düsenkörper 1 fest eingepreßten Hülse 2 sind in der Außenwand zwei einander gegenüberliegende Kanäle 8, 8' eingearbeitet, die die gleiche Querschnittsfläche aufweisen und sich über die gesamte Länge der Hülse 2 erstrecken. Am auslaßseitigen Ende besitzt die Hülse 2 einen inneren Bund 9 mit einer Bohrung für den Zapfen 10 der Ventilnadel 6 und eine sich daran anschließende rotationssymmetrische Drallkammer 11, die um den Zapfen 10 der Ventilnadel 6 gebildet ist (Fig. 4). Das auslaßseitige Ende der Hülse 2 liegt fest am Ringbund 12 des Düsenkörpers 1 an. Die Drallkammer 11 ist über tangential verlaufende Zuführungskanäle 13,13' (Fig. 5) mit den Kanälen 8, 8' für die Kraftstoffzuführung verbunden. Die Bohrung in dem Bund 9 der Hülse 2 ist geringfügig größer als der Außendurchmesser des in dieser Bohrung axialbeweglich geführten Zapfens 10 der Ventilnadel 6, so daß der dadurch gebildete Ringspalt 14 als Rückströmöffnung für den Kraftstoff dient, wenn die Düsenaustrittsöffnung 3 durch die federbelastete Ventilnadel 6 mit dem endseitigen Dichtkegel 15 verschlossen ist. Die in der Hülse 2 axialbeweglich angeordnete Ventilnadel 6 und der Innendurchmesser der Hülse 2 sind so aufeinander abgestimmt, daß der durch den Ringspalt 14 abströmende Kraftstoff problemlos zu dem im Düsenkörper 2 eingearbeiteten Abströmkanal 16 gelangen kann (Fig. 2). Außer dem Zapfen 10 mit dem Dichtkegel 15 besteht die Ventilnadel 6 aus zwei Abschnitten 17, 18 unterschiedlicher Durchmesser. Der obere Abschnitt 17 der Ventilnadel 6, der mit dem nicht näher dargestellten Druckbolzen in Wirkverbindung steht, weist einen größeren Außendurchmesser auf als der sich daran anschließende untere Abschnitt 18 (Fig. 1 und Fig. 2). Im geschlossenen Zustand der Düsenaustrittsöffnung 3 durch die Ventilnadel 6 ragt der obere Abschnitt 17 bis in den Druckraum 4 und bildet eine Druckschulter 19, an die sich dann der verjüngte Abschnitt 18 anschließt. Im oberen Teilstück dieses Abschnittes 18 ist eine Ringnut 20 eingearbeitet, die über eine radiale Bohrung 21 mit dem Abströmkanal 16 bei geschlossener Ventilnadel 6 in Verbindung steht. Bei geöffneter Ventilnadel 6 ist die radiale Bohrung 21 durch den paßgenauen Sitz der Ventilnadel 6 in diesem Bereich teilweise oder vollständig verschließbar. Oberhalb der radialen Bohrung 21 ist der Abschnitt 18 der Ventilnadel 6 paßgenau in der Hülse 2 geführt. Unterhalb der radialen Bohrung 21 ist zwischen dem Abschnitt 18 der Ventilnadel 6 und der Hülse 2 ein Ringraum 22 durch eine Vergrößerung des Innendurchmessers der Hülse 2 gebildet. Bei geschlossener Ventilnadel 6 gelangt der Kraftstoff in der Drallkammer 11 über den Ringspalt 14 in den Ringraum 22 und über die radiale Bohrung 21 in den Abströmkanal 16 (Fig. 2).
Die Kraftstoffzuführung erfolgt über den Kanal 5 und den Druckraum 4 in die beiden Kanäle 8 und 8' und von diesen aus über die tangentialen Zuführungskanäle 13 und 13' in die Drallkammer 11 (Fig. 1, Fig. 4 und Fig. 5). Beim Eintritt des Kraftstoffes in die Drallkammer bildet sich in dieser eine zur Achse der Ventilnadel gerichtete Drallströmung aus. Da die federbelastete Ventilnadel 6 die Düsenaustrittsöffnung 3 geschlossen hält, strömt der in der Drallkammer 11 rotierende Kraftstoff in den Abströmkanal zurück, wie vorstehend bereits erläutert. Durch die Kraftstoffpumpe wird der Förderstrom größer und damit erhöht sich der Druck des im Druckraum 4 befindlichen Kraftstoffes. Der erhöhte Druck wirkt auf die Druckschulter 19 der Ventilnadel 6 und überwindet die Federkraft der Ventilnadel 6, wodurch sich die Ventilnadel 6 abhebt und die Düsenaustrittsöffnung 3 freigibt Durch das Abheben der Ventilnadel 6 wird durch die Ventilnadel 6 die Bohrung 21 in der Hülse 2 verschlossen.
Der Kraftstoff kann nun nicht mehr aus der Drallkammer in den Abströmkanal gelangen, sondern er tritt durch die Düsenaustrittsöffnung 3 in den Brennraum des Verbrennungsmotors und wird dabei zerstäubt. Senkt sich der Druck im Druckraum 4 wieder ab, so wird durch die Federkraft die Ventilnadel 6 mit dem Dichtkegel 15 in die Düsenaustrittsöffnung 3 gedrückt und diese verschlossen. Dabei wird die radiale Bohrung 21 in der Hülse 2 wieder freigegeben und der Kraftstoff kann während der Förderung durch die Pumpe wieder aus der Drallkammer 11 durch den Ringspalt 14 und den Ringraum 22, die Bohrung 21 und den Abströmkanal 16 abströmen.
Der zeitliche Verlauf der einzelnen Phasen zwischen Förderbeginn und Förderende der Pumpe ist in Fig. 8 dargestellt.
Die Umfangsgeschwindigkeit des Kraftstoffes in der Drallkammer steigt mit dem Förderbeginn stetig an, ohne daß es zur Zerstäubung kommt.
Wie aus dem Diagramm ersichtlich, gibt es vor dem Förderbeginn eine Phase, in der die Umfangsgeschwindigkeit Null ist, also keine Förderung stattfindet. Die Einleitung des Kraftstoffes in die Drallkammer erfolgt daher bevorzugterweise erst kurz vor Beginn der Ventilöffnung und nicht schon während der gesamten Phase der geschlossenen Düsenaustrittsöffnung.
Mit dem Abheben der Ventilnadel bleibt die Umfangsgeschwindigkeit gleich. Es herrscht die für die Zerstäubung günstige Umfangsgeschwindigkeit also beim Öffnen der Ventilnadel bereits vor. Die Förderung des Kraftstoffes wird beim Absenken des Druckes wieder verringert. Dabei ist die Ventilnadel bereits wieder geschlossen, so daß bei zu geringem Druck die Förderung des Kraftstoffes über den Abströmkanal erfolgt.
Um den Druckanstieg des Kraftstoffes und damit den Anstieg der Umfangsgeschwindigkeit in der Drallkammer 11 zu begrenzen, kann der Druckraum 4 mit zusätzlichen Abströmkanälen verbunden werden. Der Düsenkörper 1 wird in an sich bekannter Weise mittels einer Überwurfmutter 23 an dem nicht näher dargestellten Halterkörper der Kraftstoffeinspritzvorrichtung befestigt.

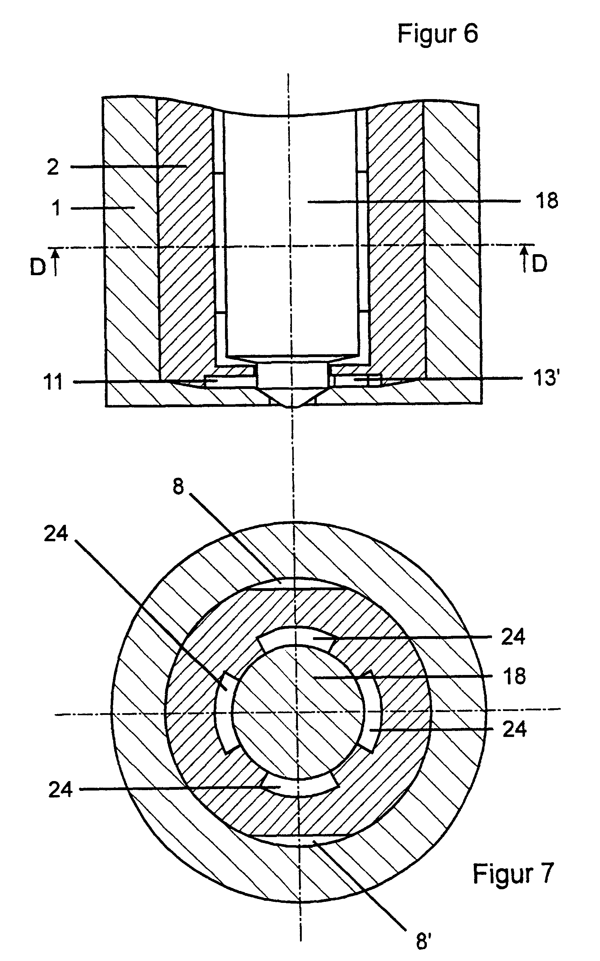

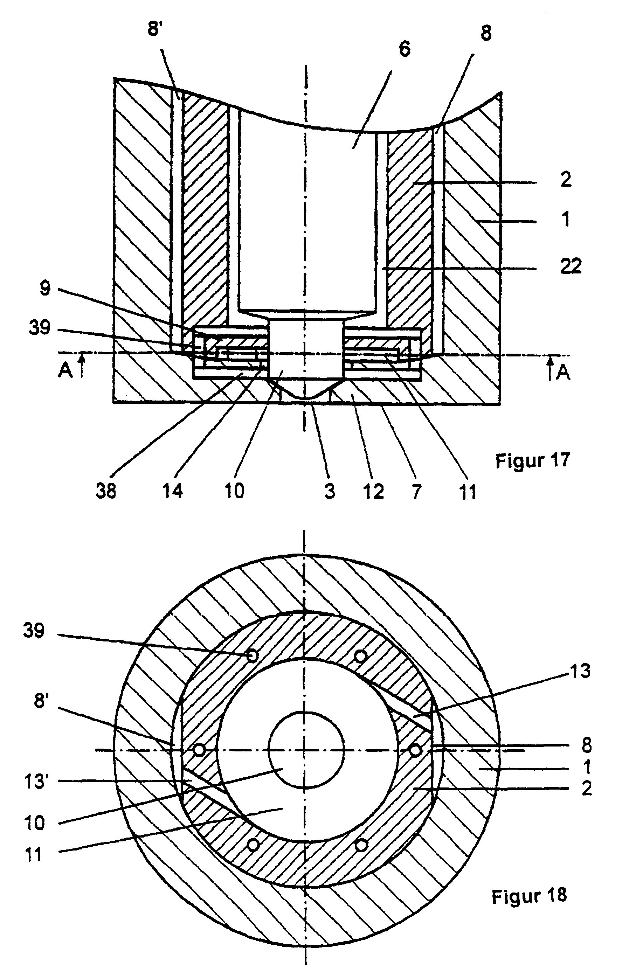

Eine andere Variante zur Abführung des Kraftstoffes aus der Drallkammer 11 ist in den Figuren 17 und 18 gezeigt Im Vergleich zu der vorstehend beschriebenen Kraftstoffabführung wird der abzuführende Kraftstoffstrom nicht um 180° in axialer Richtung umgelenkt, sondern konzentrisch unmittelbar um die Ventilnadel 6 abgeführt. Dadurch wird bereits unmittelbar bei Beginn des Einspritzvorganges eine sehr hohe Zerstäubungsqualität des Kraftstoffes erreicht Wie in den Figuren 17 und 18 gezeigt, ist um den Zapfen 10 der Ventilnadel 6 in dem Ringbund 12 des Düsenkörpers 1 ein in Einspritzungsrichtung verlaufender Ringkanal 14 eingearbeitet, der eine Verbindung zwischen der Drallkammer 11 und der nachfolgend angeordneten Ringkammer 38 herstellt. Diese ist unmittelbar vor der Mündung der Düsenöffnung 3 konzentrisch um den Zapfen 10 der Ventilnadel 6 angeordnet. Die Ringkammer 38 befindet sich in einem relativ geringen parallelen Abstand zu der Drallkammer 11 und besitzt die gleiche Höhe wie die Drallkammer 11, ist aber in ihrem Durchmesser größer als die Drallkammer 11 ausgebildet. An der größten Stelle des Radius der Ringkammer 38 sind umfangseitig sechs Durchgangsbohrungen 39 angeordnet, die sich von der Ringkammer 38 aus durch den Ringbund 12 und den Abschnitt 9 der Hülse 2 erstrecken und mit dem Ringkanal 22 in Verbindung stehen, um die Abführung des Kraftstoffes von der Ringkammer 38 in den Vorratsbehälter zu ermöglichen.
Die Funktionsweise dieser Ausführungsvariante ist folgende:
Während der Freigabe der Kraftstoffzufuhr ist die Düsenaustrittsöffnung 3 durch den Zapfen 10 der Ventilnadel 6 geschlossen. Der Kraftstoff strömt durch die Kanäle 8, 8' und 13, 13' in die Drallkammer 11 und wird in dieser in Rotation versetzt und strömt in Richtung des Zapfens 10 der Ventilnadel. Dabei tritt eine erhebliche Erhöhung der Drallgeschwindigkeit des Kraftstoffstromes ein, die direkt an dem Zapfen 10 ihr Maximum erreicht. Infolge der geschlossenen Düsenaustrittsöffnung 3 strömt der Kraftstoff von der Drallkammer 11 über den in Einspritzrichtung verlaufenden Ringkanal 14 in die Ringkammer 38, in der die Drallgeschwindigkeit abgebaut wird. Der Kraftstoff strömt aus der Ringkammer 38 über die Durchgangsbohrungen 39 in entgegengesetzter Richtung zur Einspritzrichtung in den Ringkanal 22 und von da aus in an sich bekannter Weise in den Vorratsbehälter. Wird der Einspritzvorgang durch Anheben der Ventilnadel 6 ausgelöst, so wird gleichzeitig die Kraftstoffabführung unterbrochen. Der sich unmittelbar um den Zapfen 10 der Ventilnadel 6 befindliche Kraftstoffstrom rotiert um diese mit einer sehr hohen Geschwindigkeit mit einer in Düsenaustrittsöffnung 3 gerichteten Strömungsrichtung. Beim Öffnen der Ventilnadel wird somit bereits eine optimale Zerstäubungsqualität des Kraftstoffes erreicht. Beim nachfolgenden Schließen der Düsenaustrittsöffnung 3 durch den Zapfen 10 der Ventilnadel 6 wird gleichzeitig der Weg für die Kraftstoffabführung wieder freigegeben. Bis zum erneuten Verschließen der Düsenaustrittsöffnung bleibt die hohe Rotationsgeschindigkeit des Kraftstoffes um den Zapfen 10 der Ventilnadel 6 erhalten. Während des Einspritzungsvorganges wird somit ständig eine konstant hohe Zerstäubungsqualität erreicht.
Eine weitere Ausgestaltungsvariante zur Abführung des Kraftstoffes aus der Drallkammer 11 im Bereich des Abschnittes 18 der Ventilnadel 6 und der Hülse 2 ist in den Figuren 6 und 7 gezeigt.

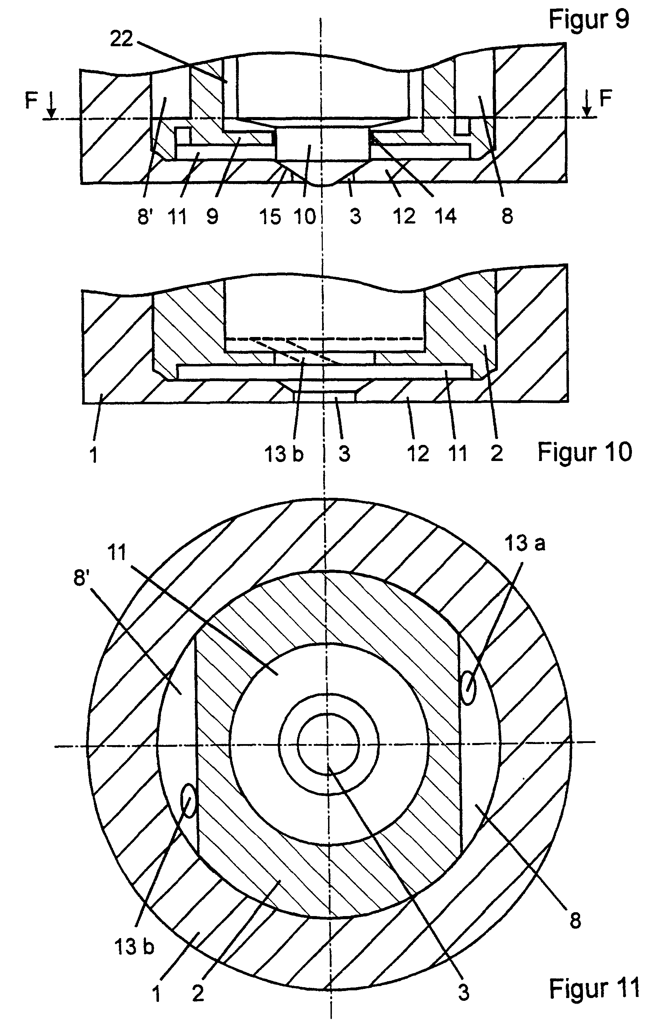

Der gezeigte Abschnitt 18 der Ventilnadel 6 liegt paßgenau an der Innenfläche der Hülse 2 an und in der Wand der Hülse 2 sind in axialer Richtung vier nutenförmige Kanäle 24 eingearbeitet, über die der Kraftstoff in die obere Ringnut 20 und von da aus über die radiale Bohrung 21 in den Abströmkanal 16 gelangt. Im Vergleich zu der in den Figuren 1 bis 5 gezeigten Ausführung sind an Stelle des dort beschriebenen Ringraumes 22 vier nutenförmige Kanäle 24 angeordnet, wobei jeweils zwei Kanäle 24 einander gegenüberliegen. Ansonsten ist die in den Figuren 6 und 7 gezeigte Ausführung analog ausgebildet wie die in den Figuren 1 bis 5 dargestellte Ausführungsvariante. In den Figuren 9 bis 11 ist eine weitere Ausführungsvariante dargestellt, bei der im Unterschied zu den Ausführungsvarianten gemäß den Figuren 1 bis 5 die in den Drallraum 11 einmündenden Zuführungskanäle 13a und 13b nicht als tangentialer Kanal ausgebildet sind, sondern als schräg von oben nach unten verlaufender Kanal. Die Kanäle 13a und 13b beginnen oberhalb der Drallkammer 11 durch die in der Hülse 2 eingebrachten Bohrungen und verlaufen schräg nach unten bis in die Drallkammer 11. Der Kraftstoff strömt ausgehend von den vertikalen Kanälen 8, 8' über die schräg verlaufenden Kanäle 13a und 13b in die Drallkammer 11, wobei der Verlauf dieser Kanäle so ausgebildet ist, daß noch die erforderliche Rotation des Kraftstoffes in der Drallkammer bewirkt wird.

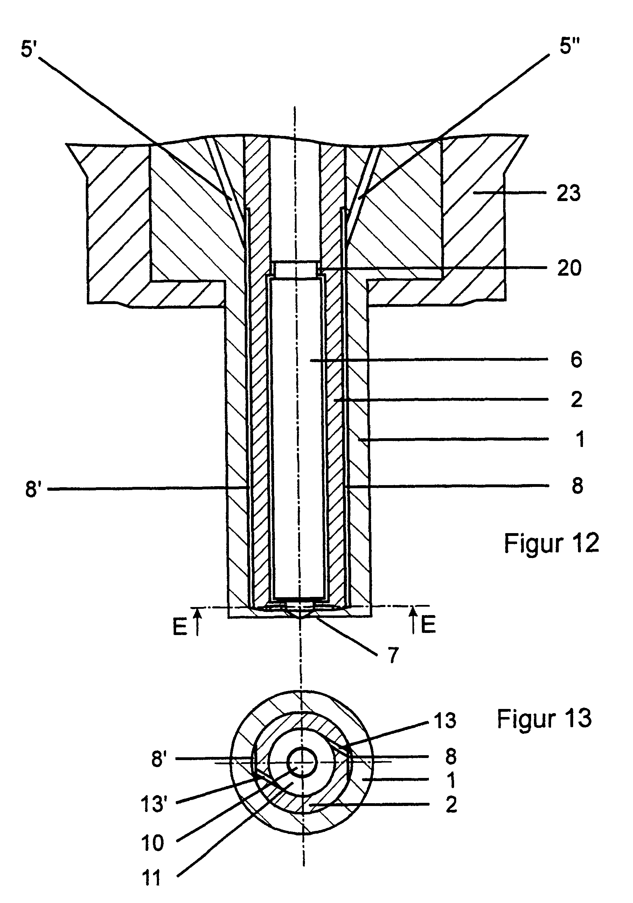

In den Figuren 12 bis 14 ist eine weitere Ausführung einer erfindungsgemäßen Einspritzdüse für ein Common-Rail-System dargestellt. Beim Common-Rail-System wird der Kraftstoff über eine als Druckspeicher wirkende Versorgungsleitung unter Hochdruck einer oder mehreren elektromagnetisch gesteuerter Einspritzdüsen zugeführt. Da in dem Gesamtsystem stets der maximale Druck anliegt, sind die Tröpfchengröße und die Strahleigenschaften drehzahlunabhängig. Der auslaßseitige Aufbau der Düse gemäß den Figuren 12 und 13 ist analog wie bereits in den Figuren 1 bis 5 gezeigt.
Der wesentliche Unterschied im Vergleich zu der in den Figuren 1 bis 5 gezeigten Ausführung besteht darin, daß kein Druckraum vorgesehen ist und die Ventilnadel 6 oberhalb der radialen Bohrung (Pos. 22 in Fig. 2) den gleichen Außendurchmesser aufweist wie unterhalb dieser Bohrung, da infolge des fehlenden Druckraumes eine Druckschulter nicht mehr erforderlich ist.
Die Kraftstoffzuführung erfolgt über zwei getrennte Kanäle 5' und 5" im Düsenkörper 1, die in die entsprechenden axialen Kanäle 8, 8', die am Außenumfang in der Hülse 2 eingearbeitet sind. Der Kraftstoff fließt durch diese Kanäle und wird über die tangential verlaufenden Zuführungskanäle 13 und 13' in die Drallkammer 11 geleitet. Die entsprechende Steuerung der Ventilnadel 6 wird in an sich bekannter Weise durch ein piezoelektrisches System bewirkt.

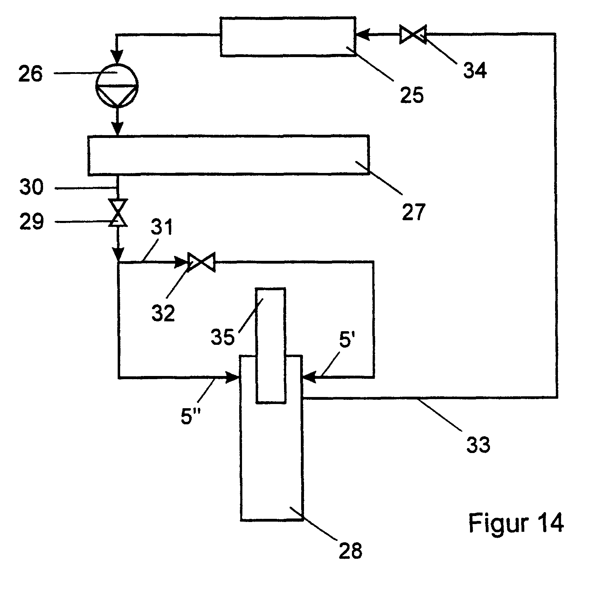

Das Verfahrensprinzip im Zusammenwirkung mit einer kraftstoffdruckunabhängigen Steuerung wird an Hand des in Fig. 14 dargestellten Funktionsschaltbildes erläutert. Beim Common-Rail-System wird von einem Kraftstoffbehälter 25 durch eine in dem Leitungssystem eingebaute Hochdruckpumpe 26 Kraftstoff über eine als Druckspeicher 27 wirkende Versorgungsleitung der bzw. den Einspritzdüsen 28 zugeführt. In die Versorgungsleitung 30 ist ein Ventil 29 eingebunden, durch das der Kraftstofffluß zeitgesteuert zur Düse freigegeben wird. In die Versorgungsleitung 30 ist nach dem Ventil 29 eine Abzweigleitung 31 eingebunden, in der ein weiteres Steuerventil 32, z.B. eine an sich bekannte Drosseleinrichtung, eingebaut ist. Die beiden Leitungen 30 und 31 sind mit den Kraftstoffleitungen 5' und 5" der Einspritzdüse 28 verbunden, wobei zur Freigabe der Düsenaustrittsöffnung ein piezokeramisches System 35 angeordnet ist. Der Kraftstoff strömt, wie bereits ausführlich erläutert, in die Drallkammer 11 der Düse und bei geschlossener Düsenaustrittsöffnung wieder über den Abströmkanal und der daran angeschlossenen Rückströmleitung 33 in den Kraftstoffbehälter 25 zurück. Zeitgleich mit der Freigabe der Düsenaustrittsöffnung durch Abheben der Ventilnadel, wird das in der Rückströmleitung 33 eingebaute Ventil 34 geschlossen. Wie bereits erläutert, rotiert der Kraftstoff in der Drallkammer bevor er durch Freigabe der Düsenaustrittsöffnung in den Brennraum des Verbrennungsmotors gelangt und dabei zerstäubt wird. Durch das in die Abzweigleitung 31 eingebaute Steuerventil 32 kann zusätzlich Einfluß auf die zerstäubte Kraftstoffmenge genommen werden. Je nach den Anforderungen (z.B. in Abhängigkeit von der Motordrehzahl) kann das Steuerventil in verschiedene Stellungen gebracht werden und dadurch die Kraftstoffdurchflußmenge beeinflußt werden. Ein Grenzfall besteht darin, daß bei geschlossenem Steuerventil 32 die Kraftstoffmenge nur durch ein Kanal- bzw. Leitungssystem 30, 5" und 8' in die Drallkammer 11 gelangt. Der andere Grenzfall, das Steuerventil 32 ist vollständig geöffnet, ermöglicht die Zuführung einer wesentlich größeren Kraftstoffmenge in die Drallkammer. Somit kann mittels dieses Steuerventils die in die Drallkammer einzuleitende Kraftstoffmenge bei gleichem Vordruck variiert werden.

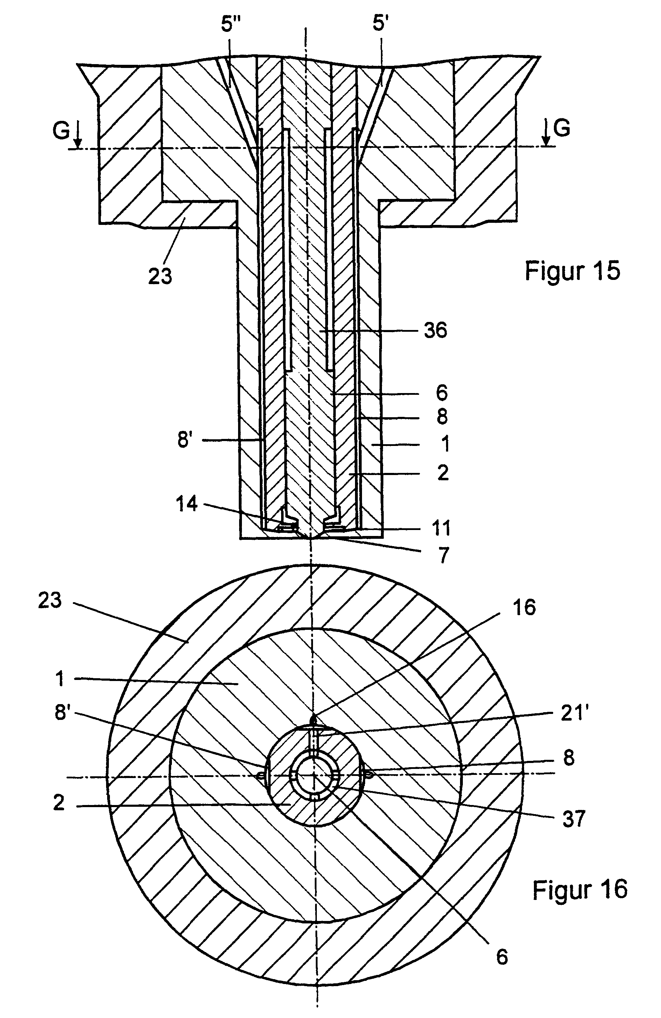

In den Figuren 15 und 16 ist eine weitere Ausführung einer Einspritzdüse für das Common-Rail-System gezeigt, die sich von der in den Figuren 12 und 13 dargestellten Ausführung lediglich dadurch unterscheidet, daß die Rückströmung für den Kraftstoff innerhalb der Düse anders ausgebildet ist.
Die Hülse 2 weist an ihrer Innenseite eine glatte Fläche auf. Die erforderlichen axialen Kanäle zur Rückführung des Kraftstoffes von der Drallkammer 11 bis zu der Bohrung 21' in der Hülse 2 sind ausschließlich in der Ventilnadel 6 eingearbeitet. Im oberen Teilstück, ausgehend von der radialen Bohrung 21', hat die Ventilnadel 6 einen am Außenumfang abgedrehten Bereich 36, durch den zwischen der Innenseite der Hülse 2 und der Ventilnadel 6 eine Ringkammer gebildet ist. Diese erstreckt sich nur über einen bestimmten Teilbereich der Ventilnadel 6. Die weitere axiale Verbindung zur Drallkammer 11 erfolgt über im Anschluß an den abgedrehten Bereich 36 eingearbeitete axiale Nuten 37 in der Ventilnadel 6. Der Bereich der Nuten 37 sollte in seiner Länge so bemessen sein, daß noch eine ausreichende Führung der Ventilnadel 6 in der Hülse 2 gewährleistet ist. Die Ringkammer 36 im oberen Teilstück der Ventilnadel 6 geht direkt in die Nuten 37 im unteren Teilstück über. Der Kraftstoff gelangt dann ausgehend von der Drallkammer 11 durch den Ringspalt 14 über die Nuten 37 in die Ringkammer 36 und über die Bohrung 21' in der Hülse 2 in den Abströmkanal 16. Der Vorteil dieser Lösung besteht in einem sehr geringen Fertigungsaufwand für die Hülse und die Ventilnadel.

## Patentansprüche

1. Verfahren zum Einspritzen von Kraftstoff, insbesondere in den Brennraum, von Brennkraftmaschinen, über eine Dralleinspritzdüse mit axialbeweglicher Ventilnadel (6, 10), wobei der unter Druck stehende zugeführte Kraftstoff durch mehrere Eintrittsöffnungen in eine unmittelbar vor der Austrittsdüse angeordnete ringförmige Drallkammer (11) in Rotation um die Ventilnadel (6, 10) versetzt wird, und der Kraftstoff an der Stelle des größten Radius der Drallkammer (11) in diese eingeleitet wird, während der zeitlichen Phase der geschlossenen Düsenaustrittsöffnung (3) dem Kraftstoffstrom zusätzlich zu der Umfangsgeschwindigkeitskomponente noch eine radiale, zur Achse der Drallkammer (11) gerichtete Geschwindigkeitskomponente aufgeprägt wird, der Kraftstoffstrom an der Stelle des kleinsten Radius der Drallkammer (11) aus dieser konzentrisch zur Ventilnadel (6, 10) abgeführt wird und während der Einspritzphase die Abführung des Kraftstoffes aus der Drallkammer (11) gedrosselt oder vollständig unterbrochen wird, **dadurch gekennzeichnet, daß** durch die einzelnen Eintrittsöffnungen unterschiedliche Kraftstoffteilmengen in die Drallkammer (11) eingeleitet werden.

2. Verfahren nach Anspruch 1, **dadurch gekennzeichnet, daß** die einzelnen Eintrittsöffnungen in der Drallkammer (11) in ihrer Querschnittsfläche unterschiedlich ausgebildet werden.

3. Verfahren nach einem der Ansprüche 1 oder 2, **dadurch gekennzeichnet, daß** die Zuführung der einzelnen Kraftstoffteilmengen zeitlich unterschiedlich gesteuert wird.

4. Verfahren nach Anspruch 3, **dadurch gekennzeichnet, daß** die einzelnen Teilstrommengen separat gesteuert werden.

5. Verfahren nach einem der Ansprüche 1 bis 4, **dadurch gekennzeichnet, daß** die Bewegung der Ventilnadel (6, 10) zum Öffnen und Schließen der Düsenaustrittsöffnung (3) stufenweise gesteuert wird.

6. Verfahren nach einem der Ansprüche 1 bis 5, **dadurch gekennzeichnet, daß** während der zeitlichen Phase der geschlossenen Düsenaustrittsöffnung (3) der an der Stelle des kleinsten Radius der Drallkammer (11) konzentrisch zur Ventilnadel (6, 10) abgeführte Kraftstoffstrom unter Beibehaltung seiner Rotationsbewegung in Einspritzrichtung strömt und vor Erreichen der Düsenaustnttsöffnung (3) radial abgeführt und anschließend in entgegengesetzter Richtung zur Einspritzrichtung in den Vorratsbehälter zurückgeführt wird.

7. Verfahren nach einem der Ansprüche 1 bis 6, **dadurch gekennzeichnet, daß** beim Common-Rail-System die Abführung des Kraftstoffes aus der Drallkammer (11) durch ein in der Rücklaufleitung (33) eingebautes Ventil (34) gesteuert wird.

8. Verfahren nach Anspruch 7, **dadurch gekennzeichnet, daß** die Abführung des Kraftstoffes aus der Drallkammer (11) phasenweise in unterschiedliche Rückstromteilmengen unterteilt wird.

9. Verfahren nach einem der Ansprüche 1 bis 8, **dadurch gekennzeichnet, daß** die jeweiligen Teilstrommengen des zugeführten Kraftstoffes und/oder des aus der Drallkammer (11) abgeführten Kraftstoffes als Stellgröße zur Steuerung verschiedener Zielgrößen benutzt werden.

10. Verfahren nach Anspruch 9, **dadurch gekennzeichnet, daß** als Zielgröße die Abgasqualität bestimmt wird.

11. Einspritzdüse, insbesondere zur Durchführung des Verfahrens nach einem der Ansprüche 1 bis 10, bestehend aus einem Düsenkörper (1) mit einer Düsenaustrittsöffnung (3) und einer Führung für eine axialbewegliche Ventilnadel (6, 10) sowie mindestens einem Kanal für die Zuführung des Kraftstoffes in eine unmittelbar vor der Düsenaustrittsöffnung (3) um die Ventilnadel (6, 10) angeordnete ringförmige Drallkammer (11) und mindestens einem Kanal zur Abführung des Kraftstoffes aus der Drallkammer (11), wobei der Außendurchmesser der Drallkammer (11) größer ist als die Höhe der Drallkammer (11) und der Kanal (14) für die Abführung des Kraftstoffes aus der Drallkammer (11) konzentrisch um die Ventilnadel (6, 10) angeordnet ist, **dadurch gekennzeichnet, daß** zur Zuführung des Kraftstoffes mehrere Zuführungskanäle (8, 8', 13, 13', 13a, 13b, 30, 31) angeordnet sind, von denen mindestens einer absperrbar ist.

12. Einspritzdüse nach Anspruch 11, **dadurch gekennzeichnet, daß** der Kanal (14) für die Abführung des Kraftstoffes mit nutenförmigen Kanälen (24), die zwischen der Hülse (2) und der Ventilnadel (6) angeordnet sind, verbunden ist.

13. Einspritzdüse nach einem der Ansprüche 11 oder 12, **dadurch gekennzeichnet, daß** am oberen Ende der Hülse (2) eine radiale Bohrung (21, 21') angeordnet ist, die mit einem im Düsenkörper (19 angeordneten Abströmkanal (16) verbunden ist.

14. Einspritzdüse nach Anspruch 13, **dadurch gekennzeichnet, daß** die radiale Bohrung (21) mittels der Ventilnadel (6) verschließbar ist.

15. Einspritzdüse nach einem der Ansprüche 11 bis 14, **dadurch gekennzeichnet, daß** die Kanäle (13, 13', 13a, 13b) in der Hülse (2) unterschiedliche Querschnitte aufweisen.

16. Einspritzdüse nach einem der Ansprüche 11 bis 15, **dadurch gekennzeichnet, daß** die Höhe der Drallkammer (11) nicht mehr als 10 % größer ist als der größte Durchmesser der in der Hülse (2) eingearbeiteten Zuführungskanäle (13, 13', 13a, 13b).

17. Einspritzdüse nach einem der Ansprüche 11 bis 16, **dadurch gekennzeichnet, daß** der Kanal (14) für die Abführung des Kraftstoffes aus der Drallkammer (11) in Einspritzrichtung verläuft und in eine vor der Düsenaustrittsöffnung (3) radial angeordnete Abführung (38) mündet, die mit in entgegengesetzter Richtung zur Einspritzrichtung verlaufenden Kanälen (39) verbunden ist, die in den Ringraum (22) zur Abführung des Kraftstoffes münden.

18. Einspritzdüse nach Anspruch 17, **dadurch gekennzeichnet, daß** die Abführung als Ringkammer (38) ausgebildet ist, die einen größeren Durchmesser als die Drallkammer (11) aufweist.

19. Einspritzdüse nach einem der Ansprüche 17 oder 18, **dadurch gekennzeichnet, daß** die in entgegengesetzter Richtung zur Einspritzrichtung verlaufenden Kanäle (39) umfangseitig an der größten Stelle des Radius der Ringkammer (38) angeordnet sind.

20. Einspritzdüse nach einem der Ansprüche 17 bis 19, **dadurch gekennzeichnet, daß** die Ringkammer (38) nicht höher ist als die Höhe der Drallkammer (11).

21. Einspritzdüse nach einem der Ansprüche 17 bis 20, **dadurch gekennzeichnet, daß** die Ringkammer (38) in einem geringen Abstand zur Drallkammer (11) angeordnet ist.

22. Einspritzdüse nach einem der Ansprüche 17 bis 21, **dadurch gekennzeichnet, daß** die Ringkammer (38) in der Hülse (2) oder in dem auslaßseitigen Bereich des Düsenkörpers (1) oder in beiden Bauteilen (38, 1) eingearbeitet ist.

23. Einspritzdüse nach einem der Ansprüche 11 bis 22, **dadurch gekennzeichnet, daß** diese in ein Common-Rail-System eingebunden ist, wobei in der als Druckspeicher wirkenden Versorgungsleitung (30) ein Ventil (29) zur zeitgesteuerten Freigabe der Kraftstoffzuführung angeordnet ist und nach diesem Ventil (29) in der Versorgungsleitung (30) eine Abzweigleitung (31) eingebunden ist, in der ein weiteres Steuerventil (32) angeordnet ist, und die beiden Leitungen (30, 31) mit den Kraftstoffzufuhrleitungen (5, 5") der Einspritzdüse (28) verbunden sind.

## Claims

1. A procedure for injecting fuel, in particular into the combustion chamber of internal combustion engines via a swirl injection nozzle with an axially movable valve needle (6, 10), wherein the pressurized supplied fuel is made to rotate around the valve needle (6, 10) via several inlet openings in an annular swirl chamber (11) arranged directly in front of the outlet nozzle, the fuel is introduced into the swirl chamber (11) where its radius is largest, a radial velocity component directed toward the axis of the swirl chamber (11) is imparted to the fuel flow while the nozzle outlet opening (3) is closed to go along with the peripheral velocity component, the fuel flow is removed from the swirl chamber (11) where its radius is smallest, concentrically to the valve needle (6, 10), and the removal of fuel from the swirl chamber (11) is slowed or completely interrupted during the injection phase, **characterized by** the fact that the individual inlet openings introduce varying partial fuel quantities into the swirl chamber (11).

2. A procedure according to claim 1, **characterized by** the fact that the individual inlet openings in the swirl chamber (11) vary in their cross-sectional areas.

3. A procedure according to one of claims 1 or 2, **characterized by** the fact that the individual partial fuel quantities are supplied at varying times determined by a controller.

4. A procedure according to claim 3, **characterized by** the fact that the individual partial flow quantities are separately controlled.

5. A procedure according to one of claims 1 to 4, **characterized by** the fact that the motion of the valve needle (6, 10) for opening and closing the valve outlet opening (3) is controlled in stages.

6. A procedure according to one of claims 1 to 5, **characterized by** the fact that, during the time for which the nozzle outlet opening (3) is closed, the fuel flow removed concentrically to the valve needle (6, 10) where the radius of the swirl chamber (11) is smallest flows in the injection direction while retaining its rotational motion, is radially removed before reaching the nozzle outlet opening (3) and subsequently returned to the storage tank moving against the injection direction.

7. A procedure according to one of claims 1 to 6, **characterized by** the fact that, in the common-rail system, the removal of fuel from the swirl chamber (11) is controlled by a valve (34) built into the reflux line (33).

8. A procedure according to claim 7, **characterized by** the fact that the removal of fuel form the swirl chamber (11) is divided into varying partial reflux quantities in phases.

9. A procedure according to one of claims 1 to 8, **characterized by** the fact that the respective partial quantities of the supplied fuel and/or fuel removed from the swirl chamber (11) are used as a variable for controlling various target parameters.

10. A procedure according to claim 9, **characterized by** the fact that the exhaust gas quality is determined as a target parameter.

11. A injection nozzle, in particular for executing the procedure according to one of claims 1 to 10, consisting of a nozzle body (1) with a nozzle outlet opening (3) and a guide for an axially movable valve needle (6, 10), along with at least one channel for supplying the fuel to an annular swirl chamber (11) situated directly in front of the nozzle outlet opening (3) around the valve needle (6, 10) and at least one channel for removing the fuel from the swirl chamber (11), wherein the outside diameter of the swirl chamber (11) exceeds the height of the swirl chamber (11), and the channel (14) for removing the fuel from the swirl chamber (11) is arranged concentrically around the valve needle (6, 10), **characterized by** the fact that several supply channels (8, 8', 13, 13', 13a, 13b, 30, 31) are provided for supplying he fuel, of which at least one can be blocked.

12. A injection nozzle according to claim 11, **characterized by** the fact that the channel (14) for removing the fuel is connected with groove-shaped channels (24) arranged between the sleeve (2) and the valve needle (6).

13. A injection nozzle according to one of claims 11 or 12, **characterized by** the fact that the top end of the sleeve (2) has a radial hole (21, 21') that is connected with a discharge channel (16) arranged in the nozzle body (19).

14. A injection nozzle according to claim 13, **characterized by** the fact that the radial hole (21) can be sealed by the valve needle (6).

15. A injection nozzle according to one of claims 11 to 14, **characterized by** the fat that the channels (13, 13', 13a, 13b) in the sleeve (2) exhibit varying cross sections.

16. A injection nozzle according to one of claims 11 to 15, **characterized by** the fact that the height of the swirl chamber (11) does not exceed the largest diameter of the supply channels (13, 13', 13a, 13b) incorporated in the sleeve (2) by more than 10%.

17. A injection nozzle according to one of claims 11 to 16, **characterized by** the fact that the channel (14) for removing the fuel from the swirl chamber (11) runs in the injection direction, and empties out into a drain (38) situated radially in front of the nozzle outlet opening (3), wherein this drain is connected with channels (39) that run against the injection direction and empty out in the annular chamber (22) for removing the fuel.

18. A injection nozzle according to claim 17, **characterized by** the fact that the drain is designed as an annular chamber (38) with a greater diameter than the swirl chamber (11).

19. A injection nozzle according to one of claims 17 or 18, **characterized by** the fact that the channels (39) running opposite the injection direction are arranged on the periphery where the radius of the annular chamber (38) is largest.

20. A injection nozzle according to one of claims 17 to 19, **characterized by** the fact that the annular chamber (38) is not higher than the height of the swirl chamber (11).

21. A injection nozzle according to one of claims 17 to 20, **characterized by** the fact that the annular chamber (38) is arranged at a slight distance from the swirl chamber (11).

22. A injection nozzle according to one of claims 17 to 21, **characterized by** the fact that the annular chamber (38) is incorporated into the sleeve (2) or the inlet-side area of the nozzle body (1), or into both components (38, 1).

23. A injection nozzle according to one of claims 11 to 22, **characterized by** the fact that it is incorporated into a common-rail system, wherein a valve (29) for the time-release supply of fuel is arranged in the supply line (30) acting as an accumulator, and a branch line (31) that accommodates another control valve (32) is incorporated into the supply line (30) after the valve (29), and the two lines (30, 31) are connected with the fuel supply lines (5, 5") of the injection nozzle (28).

## Revendications

1. Procédé d'injection de carburant, notamment dans la chambre de combustion, de moteurs à combustion, par l'intermédiaire d'un injecteur à effet d'agitation muni d'une aiguille d'injecteur (6, 10) à déplacement axial, le carburant arrivant sous pression pénétrant par plusieurs orifices d'entrée dans une chambre de rotation (11) annulaire disposée juste avant l'injecteur de sortie en y étant mis en rotation autour de l'aiguille d'injecteur (6, 10), et le carburant étant introduit dans la chambre de rotation (11) à l'endroit où le rayon de celle-ci est le plus important, pendant la phase temporelle de fermeture de l'orifice de sortie de l'injecteur (3), une composante de vitesse radiale dirigée vers l'axe de la chambre de rotation (11) étant encore rajoutée au courant de carburant en plus de la composante de vitesse périphérique, le courant de carburant étant évacué hors de la chambre de rotation (11) de façon concentrique par rapport à l'aiguille d'injecteur (6, 10) à l'endroit où le rayon de celle-ci est le plus petit et, pendant la phase d'injection, l'évacuation du carburant hors de la chambre de rotation (11) étant freinée ou complètement interrompue, **caractérisé en ce que** différentes quantités partielles de carburant sont introduites dans la chambre de rotation (11) par les orifices différentes d'entrée.

2. Procédé selon la revendication 1, **caractérisé en ce que** les orifices différentes d'entrée situés dans la chambre de rotation (11) sont différents dans leur surface de section.

3. Procédé selon l'une des revendications 1 ou 2, **caractérisé en ce que** l'arrivée des quantités partielles de carburant est réglée différemment par commande temporelle.

4. Procédé selon la revendication 3, **caractérisé en ce que** les quantités de courant partiel est commandée séparément.

5. Procédé selon l'une des revendications 1 à 4, **caractérisé en ce que** le déplacement de l'aiguille d'injecteur (6, 10) pour l'ouverture et la fermeture de l'orifice de sortie de l'injecteur (3) est commandé par étapes.

6. Procédé selon l'une des revendications 1 à 5, **caractérisé en ce que,** pendant la phase temporelle de fermeture de l'orifice de sortie d'injecteur (3), le courant de carburant évacué de façon concentrique par rapport à l'aiguille d'injecteur (6, 10) à l'endroit où le rayon de la chambre de rotation (11) est le plus petit s'écoule dans le sens d'injection en restant en rotation et, avant d'atteindre l'orifice de sortie de l'injecteur (3), il est évacué radialement et revient finalement dans le réservoir de stockage dans le sens opposé au sens d'injection.

7. Procédé selon l'une des revendications 1 à 6, **caractérisé en ce que,** dans le cas d'un système Common Rail, l'évacuation du carburant hors de la chambre de rotation (11) est commandée par une soupape (34) implantée dans la conduite retour (33).

8. Procédé selon la revendication 7, **caractérisé en ce que** l'évacuation du carburant hors de la chambre de rotation (11) est divisée par phases en quantités partielles de courant retour.

9. Procédé selon l'une des revendications 1 à 8, **caractérisé en ce que** les quantités respectives de courant partiel de carburant arrivant et/ou de carburant évacué hors de la chambre de rotation (11) sont utilisées comme grandeur de réglage destinées à commander diverses grandeurs d'arrivée.

10. Procédé selon la revendication 9, **caractérisé en ce que** la qualité des gaz rejetés est déterminée en tant que grandeur d'arrivée.

11. Injecteur, notamment pour la réalisation du procédé selon l'une des revendications 1 à 10, se composant d'un corps d'injecteur (1) muni d'un orifice de sortie d'injecteur (3) et d'un guidage pour une aiguille d'injecteur (6, 10) à déplacement axial ainsi que d'au moins un canal pour l'arrivée du carburant dans une chambre de rotation (11) annulaire disposée juste avant l'orifice de sortie d'injecteur (3) autour de l'aiguille d'injecteur (6, 10) et d'au moins un canal pour l'évacuation du carburant hors de la chambre de rotation (11), le diamètre extérieur de la chambre de rotation (11) étant supérieur à la hauteur de la chambre de rotation (11) et le canal (14) pour l'évacuation du carburant hors de la chambre de rotation (11) étant disposé de façon concentrique autour de l'aiguille d'injecteur (6, 10),
**caractérisé en ce que** plusieurs canaux d'arrivée (8, 8', 13, 13', 13a, 13b, 30, 31) dont au moins l'un est susceptible d'être bloqué sont disposés de sorte à amener le carburant.

12. Injecteur selon la revendication 11, **caractérisé en ce que** le canal (14) pour l'évacuation du carburant est relié à des canaux (24) en forme de rainure disposés entre le manchon (2) et l'aiguille d'injecteur (6).

13. Injecteur selon l'une des revendications 11 ou 12, **caractérisé en ce qu'**un perçage radial (21, 21') relié à un canal d'évacuation (16) disposé dans le corps d'injecteur (1) est disposé à l'extrémité supérieure du manchon (2).

14. Injecteur selon la revendication 13, **caractérisé en ce que** le perçage radial (21) est susceptible d'être fermé au moyen de l'aiguille d'injecteur (6).

15. Injecteur selon l'une des revendications 11 à 14, **caractérisé en ce que** les canaux (13, 13', 13a, 13b) situés dans le manchon (2) présentent des sections transversales différentes.

16. Injecteur selon l'une des revendications 11 à 15, **caractérisé en ce que** la hauteur de la chambre de rotation (11) n'excède pas 10% de la taille du diamètre le plus élevé des canaux d'arrivée (13, 13', 13a, 13b) insérés dans le manchon (2).

17. Injecteur selon l'une des revendications 11 à 16, **caractérisé en ce que** le canal (14) pour l'évacuation du carburant hors de la chambre de rotation (11) s'étend dans le sens d'injection et débouche dans un système d'évacuation (38) disposé radialement avant l'orifice de sortie d'injecteur (3) et relié à des canaux (39) qui s'étendent dans le sens opposé au sens d'injection et débouchent dans l'espace annulaire (22) pour l'évacuation du carburant.

18. Injecteur selon la revendication 17, **caractérisé en ce que** le système d'évacuation est réalisé en chambre annulaire (38) présentant un diamètre supérieur à la chambre de rotation (11).

19. Injecteur selon l'une des revendications 17 ou 18, **caractérisé en ce que** les canaux (39) s'étendant dans le sens opposé au sens d'injection sont disposés du côté de la circonférence à l'endroit où le rayon de la chambre annulaire (38) est le pus important.

20. Injecteur selon l'une des revendications 17 à 19, **caractérisé en ce que** la chambre annulaire (38) n'est pas plus élevée que ne l'est la chambre de rotation (11).

21. Injecteur selon l'une des revendications 17 à 20, **caractérisé en ce que** la chambre annulaire (38) est disposée à une faible distance par rapport à la chambre de rotation (11).

22. Injecteur selon l'une des revendications 17 à 21, **caractérisé en ce que** la chambre annulaire (38) est insérée dans le manchon (2) ou dans le domaine du corps d'injecteur (1) situé du côté de la sortie ou dans les deux composants (38, 1).

23. Injecteur selon l'une des revendications 11 à 22, **caractérisé en ce que** celui-ci est incorporé à un système Common Rail, une soupape (29) destinée à libérer par commande temporelle l'arrivée de carburant étant disposée dans la conduite d'alimentation (30) agissant en accumulateur de pression, et une conduite de dérivation (31) étant implantée après cette soupape (29) dans la conduite d'alimentation (30), conduite dans laquelle est disposée une autre soupape de commande (32), et les deux conduites (30, 31) sont reliées aux conduites d'arrivée du carburant (5, 5'') de l'injecteur (28).
